# EUROPEAN PATENT SPECIFICATION

(11) **EP 1 353 567 B1**
(45) Date of publication and mention of the grant of the patent: **15.03.2006**
(21) Application number: 01272707.9
(22) Date of filing: 19.12.2001
(51) Int. Cl.: A23L 1/18, A23L 1/164, A23L 1/10, A23P 1/14, A23P 1/10, A21B 5/02

(54) **AN APPARATUS AND METHOD FOR PRODUCING CEREAL CAKES**
VORRICHTUNG UND VERFAHREN ZUR HERSTELLUNG VON GETREIDEKUCHEN
APPAREIL ET PROCEDE POUR PRODUIRE DES GATEAUX DE CEREALES

(30) Priority: 02.01.2001 GB 0100042
(43) Date of publication of application: 22.10.2003
(73) Proprietor: Mars Incorporated, McLean, Virginia 22101-3883 (US)
(72) Inventor: SMITH, Gordon MacDonald Bodie, Huddersfield, West Yorkshire HD3 3XU (GB)
(74) Representative: Jackson, Richard Eric
(86) International application number: PCT/GB2001/005652
(87) International publication number: WO 2002/052953

(56) References cited:
- WO-A-88/00797
- WO-A-98/26673
- FR-A- 2 617 014
- US-A- 4 667 588
- US-A- 5 562 021

## Description

This invention relates to an apparatus and method for producing foodstuffs, such as crackers or cakes. More specifically, this invention relates to apparatus for continuously producing granular crackers or cakes from cereal or other such materials.

There exist various apparatus for producing granular crackers from cereal raw materials. Some of these utilise the processes of pressure baking and expanding the materials to produce crackers or the like. The crackers produced come in various shapes and sizes, are made from different cereals/raw materials and different combinations of cereals and/or other raw materials, and are intended for different purposes. For example, rice crackers in the shape of a bone may be used for the feeding of dogs, whereas other shapes may be more intended for human consumption.

In the prior art apparatus, as may be readily seen in EP 0499301 (corresponding to WO 92/12646) and EP 0359740 (corresponding to WO 88/06425), moulds consisting of a stationary upper heated mould element, a moveable ring mould and a reciprocating lower mould element are utilised. These moulds may comprise a number of individual moulding areas. In operation, cereal product is placed upon the lower mould element, which is then raised into the ring mould. This action causes product to be contained within the chamber formed by the three mould elements. Inside this chamber, the product is subjected to pressure baking and expansion. To remove the product which is now in the form of an expanded cereal cracker, the lower mould element is lowered and the cracker is scraped or pushed off of it.

As will be readily appreciated, the above process is limited as to the number of pieces it can produce in a given time, because for each moulding step carried out, all the moulds must be emptied and refilled. It is a classic batch process wherein whilst filling etc. is taking place, moulding is not. This is obviously undesirable. The more pieces that can be produced in a given time, the better, from the point of view of both the manufacturer and consumer. This is because the more pieces that are produced per unit time, the less the cost per piece is to the manufacturer. Ultimately this benefit can be passed on to the consumer.

Therefore, there exists a problem in increasing the yield of granular cracker producing apparatus.

The present invention provides an apparatus with distinct advantages over the prior art. This apparatus does not operate a batch production procedure. Rather, it continuously produces pieces whilst it is in operation.

According to the present invention, there is provided an apparatus for producing cereal cakes by a process of heating and expanding, comprising a rotatable heatable platten defining a plurality of moulds and a plurality of displaceable moulding tools for communicating with the platten, wherein as the platten is rotated successive moulds are heated and closed by the moulding tools to produce a continuous supply of cereal cakes.

According to a preferred embodiment of the present invention, the moulds in the platten take the form of bores running through the platten.

According to a preferred embodiment of the present invention, for each mould, there is a corresponding pair of moulding tools, the pair comprising, when the platten is arranged to rotate in a horizontal plane, a downwardly displaceable tool arranged to descend into the mould, and an upwardly displaceable tool arranged to ascend into the mould.

Preferably, the moulding tools, when located within the mould, sealingly form a chamber defined by the mould and the tools.

According to a further preferred embodiment of the present invention, the moulding tools are guided by a track or rail. Preferably, a first set of tools are guided by a first rail and a second set of tools are guided by a second rail. More preferably, the first rail is adjacent one face of the platten and the second rail is adjacent the other face of the platten.

According to a further preferred embodiment of the present invention, the guide rails are configured to effect the displacement of the tools associated therewith, with respect to the rotatable platten, as the platten rotates.

According to a further preferred embodiment of the present invention, each rail comprises at least two phases, each phase positioning a tool attached to the rail at a selected displacement with respect to the rotatable platten. Preferably, the tools in communication with one guide rail go through periods of being completely removed from their corresponding moulds and other periods of being positioned partially therein. Preferably, the tools attached to one guide rail move through various amounts of partial containment within mould, as dictated by the position of the guide rail in relation to the platten in the various phases.

According to a still further preferred embodiment of the present invention, displacement of the moulding tools occurs due to undulations in the guide track. Preferably, the moulding tools move with the rotating platten, in such a way that the tools retain their locations relative to the mould space to which they correspond.

Also, in accordance with the present invention there is provided a method of continuously producing cereal cakes or the like, comprising the steps of, for each mould in a plurality of moulds arranged to cycle repeatedly through a closed loop, filling the mould with cereal or the like, closing the mould, heating the mould for a period, and opening the mould and dispensing a cake. Preferably, the method further includes the step of pre-heating the mould during the closure thereof.

Preferably, each step is carried out in accordance with the location of a mould within the cycle.

A specific embodiment of the present invention is now described, by way of example only, with reference to the accompanying drawings, in which:-
Figure 1 shows a platten for use in the present invention;
Figure 2a shows a square mould configuration;
Figure 2b shows a dog's bone shaped mould configuration;
Figure 2c shows an oval mould configuration;
Figures 3a-c illustrate the operation and possible configurations of guide tracks according to the present invention; and
Figure 4 illustrates the operation of the apparatus of the above three Figures.

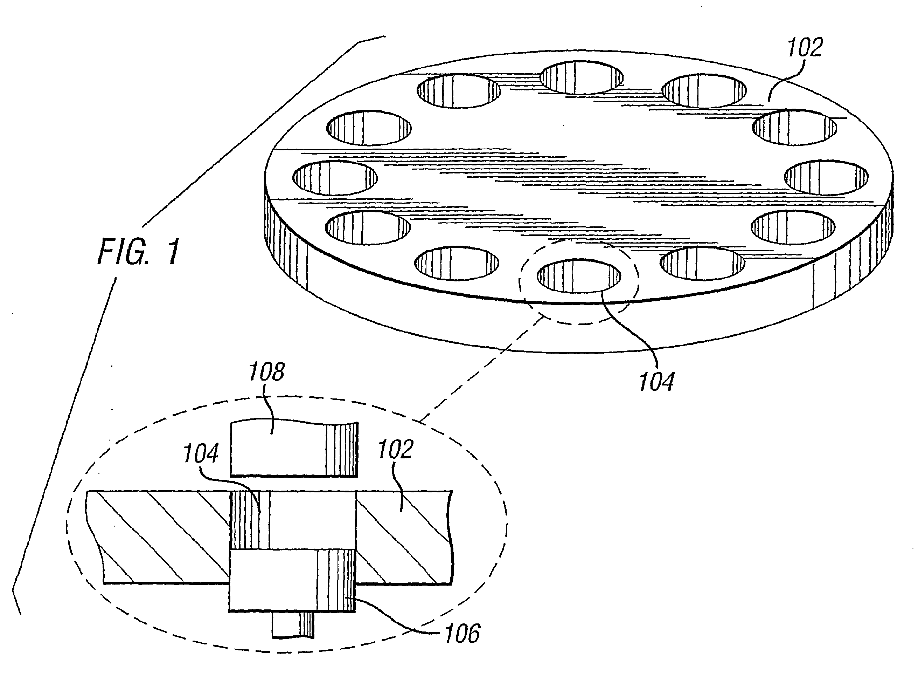

Referring to the drawings, and firstly to Figure 1, the apparatus makes use of a rotatable platten 102. The platten is generally located in the horizontal plane, and has located around, and inwardly spaced from, its outer most edge, a plurality of apertures 104 bored through it. These apertures form the first part of a three-part mould system according to this invention. Rotation of the platten is provided by an electric motor (not shown), or other such means.

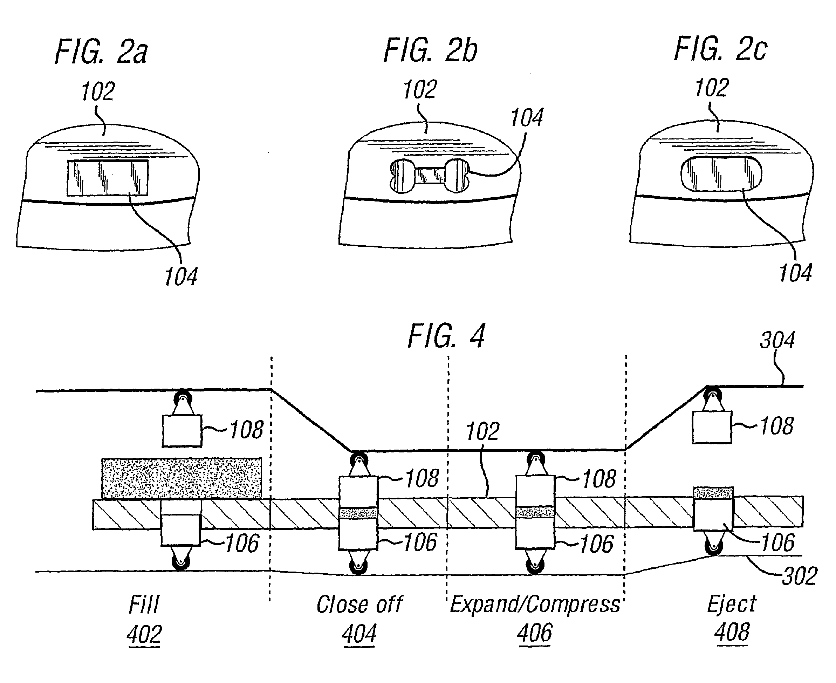

As may be seen from Figures 2a-c, the moulds may take any reasonable shape, thus allowing the production of shaped pieces or crackers. Figure 2a illustrates a mould with a square configuration. Figure 2b shows a mould with a dog's bone configuration and Figure 2c shows a mould with a curved profile.

Returning to Figure 1, for each aperture or mould 104 there is provided an upper and lower moulding tool. These comprise the remaining two parts of the three part mould system mentioned above. As is illustrated, the lower moulding tool 106 is located within the mould 104. The lower moulding tool 106 is able to advance inwardly along the mould 104 and equally to retreat outwardly along the mould 104. The means, one or more pairs of guide tracks, by which this movement is effected will be described below. Whilst movement is provided to the lower moulding tool 106, it is prevented from exiting the mould 104. The lower moulding tool 106 remains at least partially within the mould 104 at all times, except perhaps for cleaning.

Corresponding to the lower moulding tool 106, there is provided an upper moulding tool 108. The upper moulding tool 108 is provided with similar movement to the lower moulding tool 106, except that it is enabled to be removed entirely from the mould 104 in order to facilitate the entry of material thereto.

In order for pressure baking of cereals to take place, those cereals must be pressurised when in the moulding space. Such pressurisation is provided by the expansion of the product between the two moulding tools whilst bound by the mould 104. However, in order that this is best achieved, there is provided a seal between each tool and the mould 104 in which it is located, and in the case of the upper tool, when it is located therein. This is to ensure that no product escapes from the mould, and likewise that no foreign body enters the mould during the process. To facilitate pressure baking, the platten is heated, thereby transferring heat to the cereal/raw materials located within the mould space 104, through the walls thereof. This results in very efficient heating of the cereal, saving processing time over prior art apparatus.

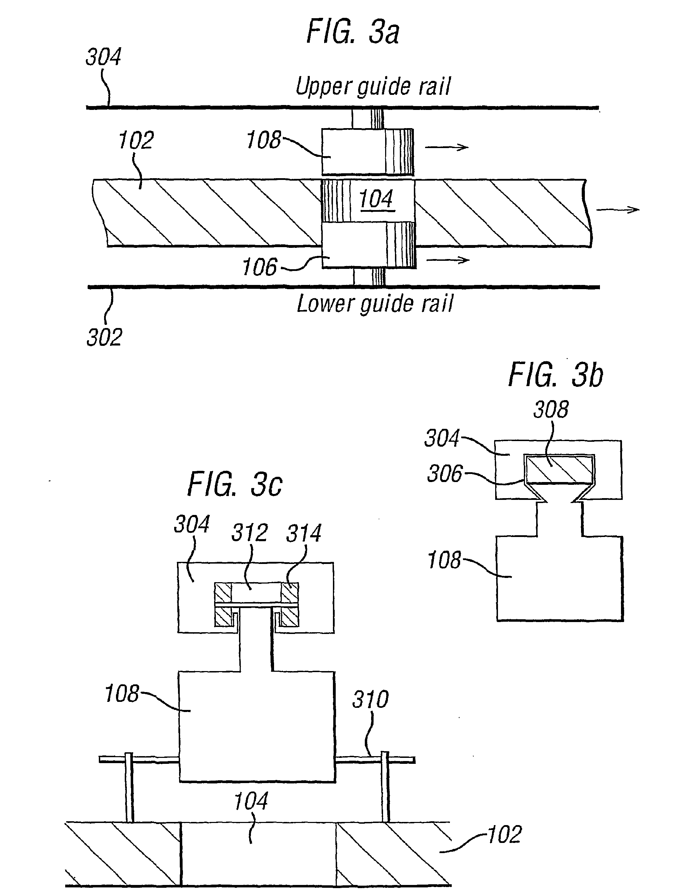

The configuration of the guide tracks is now described with reference to Figures 3a-c. As has already been stated, the guide tracks control the position of the moulding tools 106,108 with respect to the rotatable platten 102. In other words, it is the guide tracks which control the displacement of the moulding tools 106, 108. As may be seen in Figure 3a, as the platten 102 rotates, the moulding tools 106,108 are caused to move in order to retain their relationship with the platten. It is the guide tracks 302,304 which determine the paths which are followed by the tools, thus, in the case of Figure 1 which provides a circular rotatable platten, the guide rails would present a circular profile located about the same axis as the platten with its diameter corresponding to the distance between the central axis of the platten and of the moulding spaces.

Figure 3b illustrates one possible mechanism for providing movement to the tools. Each guide track 302,304 is provided with a keyed groove in which there is provided a conveyor means 308, in the form of a belt or chain for example. Each tool is attached to the conveyor means 308. The movement of the conveyor means is synchronous with that of the platten. Thus, as the platten rotates, the conveyor means moves around the guide track carrying the moulding tools 106,108 and maintaining their spatial arrangement with respect to the platten and the mould spaces to which they correspond.

Figure 3c depicts an alternative mechanism for providing movement to the tools 106, 108. As was previously set forth, the lower moulding tool 106 remains at least partially within the mould space at all times. Therefore, the movement thereof is provided by the rotating platten as it rotates. In this case, the lower guide track 302 serves to maintain the correct alignment of the tool within the mould space, and to vary the degree of entry therein. The first of these may be achieved by a wheel arranged in the groove, or in other similar arrangement. The second will be discussed below.

The case for the upper moulding tool 108 is more complex, because the upper moulding tool is removed entirely from the moulding space 104 for at least a part of the production process (as will be described below with reference to Figure 4). In order to utilise the movement of the platten 102 as the driving force, there is provided a guide means 310 arranged around each mould 104 on the upper surface of the platten 102. The guide means 310 is in contact with the tool at all times during production, thereby effectively transmitting the movement of the platten to the tool. The guide means 310 is arranged so that it remains in contact with the upper moulding tool 108 irrespective of the degree of entry, into the mould 104, of the tool. In order to facilitate this drive mechanism, the upper guide track is provided with means for allowing movement of the tool attached thereto. In this embodiment, such means take the form of an internal track 312 and enclosed wheel 314 arrangement as may best be seen in Figure 3c.

The provision of displacement to the moulding tools 106,108 is now described with reference to Figure 4. As may be seen, the spacing of each guide track 302,304 relative to the closest surface of the platten 102 differs according to the stage of the cracker production process currently being undertaken for a specific mould group 104,106,108. Referring firstly to the lower mould tool 106 and track 302, there are provided inclines in the track 302. These link raised and lowered portions of the track 302. As such, a tool 106 travelling along the lower guide track 302 will travel down an incline between a raised and a lower track section, thereby causing the tool 106 to be partially retracted from the mould 104. Similarly, when an incline between a lower track section and a raised track section is traversed, the tool 106 will penetrate further into the mould 104.

The displacement or reciprocation of the upper tool 108 follows the same principles. However, traversing an incline between a raised and lower track section induces penetration into the mould 104, and traversing an incline between a lowered track section and a raised track section induces removal of the moulding tool 108 from the mould 104, either partially or totally.

The cracker production process, utilising the apparatus of the present invention, is now described, again with reference to Figure 4. The process comprises essentially four stages. Each mould group 104,106,108 progresses through all the stages and, upon completion, recommences. Therefore, one complete revolution of the platten 102 forms a cycle within a continuous process. The first stage 402 constitutes the filling of the mould with one or more granular cereal, such as rice, or other raw material. When a mould group progresses through this stage, it is configured by the guide tracks 302, 304 such that the upper moulding tool 108 is retracted entirely from the moulding space, thereby allowing the entry of cereal etc. thereto. The lower moulding tool 106 is located partially within the moulding space 104, thereby forming a recess for the reception of cereals.

The next stage 404 constitutes the closing of the mould group 104, 106, 108 to form a mould. As a mould group 104, 106, 108 passes through this stage, the upper guide track 304 is arranged such that the upper moulding tool 108 enters the mould 104, thereby forming the required mould shape. As this is taking place, the lower moulding tool 106 is caused by the lower guide track 302 to retract slightly. Additionally, the cereal product within the mould may be pre-heated by heating of the platten 102 during this closure. Such a procedure speeds up the overall process of cake production, because it reduces the duration of heating required when the mould is fully closed.

During the third stage 406 of the process, the spatial arrangement of the mould group 104,106,108 is not caused to vary. It is during this stage that the cereal contained within the mould is subjected to pressure baking by the heated platten and mould arrangement, and to expansion. More particularly, the rice grains expand to fill the mould cavity, and are subsequently pressurised into a defined shape by the mould. At the end of this stage, an expanded cereal cracker has been formed in the mould group 104,106,108.

The final stage 408 in the process is the ejection and/or removal of the produced cracker from the mould group 104, 106, 108 and indeed the whole apparatus. In this stage, the guide tracks are shaped such that, as a mould group 104, 106, 108 passes through, the upper moulding tool 108 is retracted entirely from the mould space 104. Additionally, the lower moulding tool 106 is caused to penetrate further into the mould 104, such that the cereal cracker produced is lifted out of the mould 104. In this position, the upper surface of the lower moulding tool 106 (in contact with the cracker) is substantially aligned with the upper surface of the platten 102. The formed cracker or cake is now removed from the platten by sweeping, scraping, or some other analogous procedure.

Whilst this invention has been described with reference to moulding tools which present a planar profile (see Figures 1 to 4) to the interior chamber of the mould. It will be readily appreciated that shaped profiles may be as easily utilised. For example, moulding tools presenting concave and/or convex surfaces to the mould interior are certainly suitable.

## Claims

1. An apparatus for producing cereal cakes by a process of heating and expanding, comprising:
a rotatable heatable platten defining a plurality of moulds; and
a plurality of displaceable moulding tools for communicating with the platten;
wherein as the platten is rotated, successive moulds are heated and closed by the moulding tools to produce a continuous supply of cereal cakes.

2. An apparatus as claimed in claim 1, wherein the moulds in the platten take the form of bores running through the platten.

3. An apparatus as claimed in claim 2, wherein, for each mould, there is a corresponding pair of moulding tools, the pair comprising, when the platten is arranged to rotate in a horizontal plane:
a downwardly displaceable tool arranged to descend into the mould; and
an upwardly displaceable tool arranged to ascend into the mould.

4. An apparatus as claimed in claim 3, wherein the moulding tools, when located within the mould, form a closed chamber defined by the mould and the tools.

5. An apparatus as claimed in any preceding claim, wherein the moulding tools are guided by a rail.

6. An apparatus as claimed in claim 5, wherein a first set of tools are guided by a first rail and a second set of tools are guided by a second rail.

7. An apparatus as claimed in claim 6, wherein the first rail is adjacent one face of the platten and the second rail is adjacent the other face of the platten.

8. An apparatus as claimed in claim 5, 6 or 7, wherein the guide rails are configured to effect the displacement of the tools associated therewith, with respect to the rotatable platten, as the platten rotates.

9. An apparatus as claimed in any of claims 5 to 8, wherein each rail comprises at least two phases, each phase positioning a tool attached to the rail at a selected displacement with respect to the rotatable platten.

10. An apparatus as claimed in claim 9, wherein the tools in communication with one guide rail go through periods of being completely removed from their corresponding moulds and other periods of being positioned partially therein.

11. An apparatus as claimed in claim 9 or claim 10, wherein the tools attached to one guide rail move through various amounts of partial containment within a mould, as dictated by the position of the guide rail in relation to the platten in the various phases.

12. An apparatus as claimed in any of claims 9 to 11, wherein displacement of the moulding tools occurs due to undulations in the guide track.

13. An apparatus as claimed in any preceding claim, wherein the moulding tools move with the rotating platten, in such a way that the tools retain their locations relative to the mould space to which they correspond.

14. An apparatus as claimed in any preceding claim, further comprising drive means for rotating the platten and/or the moulding tools.

15. A method, using an apparatus as claimed in any preceding claim, of continuously producing cereal cakes or the like, comprising the steps of:
for each mould in a plurality of moulds arranged to cycle repeatedly through a closed loop:
filling the mould with cereal or the like;
closing the mould;
heating the mould for a period; and
opening the mould and dispensing a cake.

16. A method as claimed in claim 15, wherein the mould is pre-heated during the closure thereof.

17. A method as claimed in either of claims 15 or 16, wherein each step is carried out in accordance with the location of a mould within the cycle.

## Patentansprüche

1. Vorrichtung zum Herstellen von Getreidekuchen durch ein Erhitzungs- und Expansionsverfahren, umfassend:
eine drehbare, beheizbare Platte, die eine Anzahl von Formen bildet; und
eine Anzahl von verlagerbaren Formwerkzeugen, um mit der Platte in Verbindung zu treten;
wobei dann, wenn die Platte gedreht wird, aufeinanderfolgende Formen erwärmt und durch die Formwerkzeuge geschlossen werden, um eine kontinuierliche Lieferung von Getreidekuchen zu erzeugen.

2. Vorrichtung nach Anspruch 1, **dadurch gekennzeichnet, daß** die Formen in der Platte die Form von Bohrungen aufweisen, die durch die Platte hindurch verlaufen.

3. Vorrichtung nach Anspruch 2, **dadurch gekennzeichnet, daß** für jede Form ein entsprechendes Paar von Formwerkzeugen vorhanden ist, wobei das Paar umfaßt, wenn die Platte so angeordnet ist, daß sie sich in einer horizontalen Ebene dreht:
ein nach unten verlagerbares Werkzeug, welches eingerichtet ist, um sich in die Form hinabzubewegen; und
ein nach oben verlagerbares Werkzeug, welches eingerichtet ist, um sich in die Form hinaufzubewegen.

4. Vorrichtung nach Anspruch 3, **dadurch gekennzeichnet, daß** die Formwerkzeuge, wenn sie innerhalb der Form angeordnet sind, eine geschlossene Kammer bilden, die durch die Form und die Werkzeuge festgelegt ist.

5. Vorrichtung nach einem der vorangehenden Ansprüche, **dadurch gekennzeichnet, daß** die Formwerkzeuge durch eine Schiene geführt sind.

6. Vorrichtung nach Anspruch 5, **dadurch gekennzeichnet, daß** ein erster Satz von Werkzeugen durch eine erste Schiene geführt ist und ein zweiter Satz von Werkzeugen durch eine zweite Schiene geführt ist.

7. Vorrichtung nach Anspruch 6, **dadurch gekennzeichnet, daß** die erste Schiene benachbart zu einer Fläche der Platte ist und die zweite Schiene benachbart zu der anderen Fläche der Platte ist.

8. Vorrichtung nach Anspruch 5, 6 oder 7, **dadurch gekennzeichnet, daß** die Führungsschienen so konfiguriert sind, daß sie die Verlagerung der Werkzeuge, die diesen zugeordnet sind, ausführen, in Bezug auf die drehbare Platte, wenn sich die Platte dreht.

9. Vorrichtung nach einem der Ansprüche 5 bis 8, **dadurch gekennzeichnet, daß** jede Schiene zumindest zwei Phasen aufweist, wobei jede Phase ein an der Schiene befestigtes Werkzeug an einer ausgewählten Verlagerung in Bezug auf die drehbare Platte positioniert.

10. Vorrichtung nach Anspruch 9, **dadurch gekennzeichnet, daß** die Werkzeuge in Verbindung mit einer Führungsschiene durch Perioden hindurchgehen, in denen sie vollständig von ihren entsprechenden Formen entfernt sind, und durch andere Perioden, in denen sie teilweise in diesen positioniert sind.

11. Vorrichtung nach Anspruch 9 oder 10, **dadurch gekennzeichnet, daß** die Werkzeuge, die an einer Führungsschiene befestigt sind, sich durch unterschiedliche Ausmaße einer teilweisen Aufnahme innerhalb einer Form bewegen, wie dies durch die Position der Führungsschiene in Bezug auf die Platte in den unterschiedlichen Phasen vorgegeben ist.

12. Vorrichtung nach einem der Ansprüche 9 bis 11, **dadurch gekennzeichnet, daß** eine Verlagerung der Formwerkzeuge aufgrund von Wellungen in der Führungsschiene auftritt.

13. Vorrichtung nach einem der vorangehenden Ansprüche, **dadurch gekennzeichnet, daß** die Formwerkzeuge sich mit der sich drehenden Platte bewegen, in einer solchen Weise, daß die Werkzeuge ihre Positionen relativ zu dem Formraum, dem sie entsprechen, beibehalten.

14. Vorrichtung nach einem der vorangehenden Ansprüche, weiter **gekennzeichnet durch** ein Antriebsmittel zum Drehen der Platte und/oder der Formwerkzeuge.

15. Verfahren, unter Verwendung einer Vorrichtung nach einem der vorangehenden Ansprüche, zum kontinuierlichen Herstellen von Getreidekuchen oder ähnlichem, welches die Schritte umfaßt:
für jede Form in einer Anzahl von Formen, die angeordnet sind, wiederholt zyklisch durch eine geschlossene Schleife zu verlaufen:
Füllen der Form mit Getreide oder ähnlichem;
Schließen der Form;
Erhitzen der Form während einer Periode; und
Öffnen der Form und Ausgeben eines Kuchens.

16. Verfahren nach Anspruch 15, **dadurch gekennzeichnet, daß** die Form während des Schließens der Form vorgeheizt wird.

17. Verfahren nach einem der Ansprüche 15 oder 16, **dadurch gekennzeichnet, daß** jeder Schritt in Übereinstimmung mit der Position einer Form innerhalb des Zyklus ausgeführt wird.

## Revendications

1. Appareil pour la fabrication de gâteaux de céréales par un procédé de chauffage et de dilatation, comprenant :
un plateau apte à être chauffé, apte à tourner, définissant une pluralité de moules ; et
une pluralité d'outils de moulage aptes à être déplacés pour communiquer avec le plateau ;
dans lequel, lorsque le plateau tourne, les moules successifs sont chauffés et fermés par les outils de moulage pour produire une alimentation continue de gâteaux de céréales.

2. Appareil selon la revendication 1, dans lequel les moules dans le plateau affectent la forme d'alésage au travers du plateau.

3. Appareil selon la revendication 2, dans lequel, pour chaque moule, il y a une paire correspondante d'outils de moulage, la paire comprenant lorsque le plateau est agencé pour tourner dans un plan horizontal :
un outil apte à être déplacé vers le bas, agencé pour descendre dans le moule ; et
un outil apte à être déplacé vers le haut, agencé pour monter dans le moule.

4. Appareil selon la revendication 3, dans lequel les outils de moulage, lorsqu'ils sont situés dans le moule, forment une chambre fermée définie par le moule et les outils.

5. Appareil selon l'une quelconque des revendications précédentes, dans lequel les outils de moulage sont guidés par un rail.

6. Appareil selon la revendication 5, dans lequel un premier groupe d'outils est guidé par un premier rail et un deuxième groupe d'outils est guidé par un deuxième rail.

7. Appareil selon la revendication 6, dans lequel le premier rail est contigu à une face du plateau et le deuxième rail est contigu à l'autre face du plateau.

8. Appareil selon la revendication 5, 6 ou 7, dans lequel les rails de guidage sont configurés pour réaliser le déplacement des outils associés à ceux-ci par rapport au plateau apte à tourner lorsque le plateau tourne.

9. Appareil selon l'une quelconque des revendications 5 à 8, dans lequel chaque rail comprend au moins deux phases, chaque phase positionnant un outil fixé au rail en un déplacement choisi par rapport au plateau apte à tourner.

10. Appareil selon la revendication 9, dans lequel les outils en communication avec un rail de guidage passent par des périodes de retrait complet de leurs moules correspondants et d'autres périodes de positionnement partiel dans ceux-ci.

11. Appareil selon la revendication 9 ou la revendication 10, dans lequel les outils fixés à un rail de guidage se déplacent selon diverses quantités de contenu partiel dans un moule, comme cela est dicté par la position du rail de guidage par rapport au plateau dans les diverses phases.

12. Appareil selon l'une quelconque des revendications 9 à 11, dans lequel le déplacement des outils de moulage se produit en raison d'ondulations dans la piste de guidage.

13. Appareil selon l'une quelconque des revendications précédentes, dans lequel les outils de moulage se déplacent avec le plateau rotatif de telle façon que les outils restent dans leurs emplacements par rapport à l'espace de moule auquel ils correspondent.

14. Appareil selon l'une quelconque des revendications précédentes, comprenant, en outre, des moyens d'entraînement pour faire tourner le plateau et/ou les outils de moulage.

15. Procédé utilisant un appareil selon l'une quelconque des revendications précédentes, de production en continu de gâteaux de céréales ou analogues, comprenant les étapes de :
pour chaque moule dans une pluralité de moules agencés pour réaliser un cycle de façon répétée au travers d'une boucle fermée :
remplir le moule avec une céréale ou analogue ;
fermer le moule ;
chauffer le moule pendant une période ; et
ouvrir le moule et distribuer un gâteau.

16. Procédé selon la revendication 15, dans lequel le moule est préchauffé pendant sa fermeture.

17. Procédé selon l'une des revendications 15 ou 16, dans lequel chaque étape est mise en oeuvre conformément à l'emplacement d'un moule dans le cycle.
